# EUROPEAN PATENT APPLICATION

(11) **EP 2 080 697 A2**
(43) Date of publication of application: **22.07.2009**
(21) Application number: 09150791.3
(22) Date of filing: 16.01.2009
(51) Int. Cl.: B62J 7/02

(54) **Carrying racks for cyles**

(30) Priority: 18.01.2008 GB 0800943
(71) Applicant: Zyro Limited, Thirsk, North Yorkshire YO7 3BX (GB)
(72) Inventor: Bennison,, Andrew c/o Zyro Limited, Thirsk, Yorkshire YO7 3BX (GB)
(74) Representative: Harrison Goddard Foote

(57) **Abstract**

A bicycle carrying frame for mounting on a bicycle front fork comprises a first frame member configured for attachment to a first front fork, the frame member comprising a lower attachment formation and an upper attachment formation by means of which the frame member is attachable respectively to a relatively lower mounting location of the fork and a relatively higher mounting location of the fork, one of said attachment formations being a mounting assembly comprising a rotatable element including one or more fixing points, whereby, when the frame member is disposed in a desired orientation with respect to the bicycle, the rotatable element can be rotated by a user to present the, or one of, said fixing points to the adjacent mounting location.

## Description

The present invention relates to carrying racks for cycles and in particular to carrying racks arranged and mounted adjacent the front wheel of a pedal cycle. More especially, the present invention relates to carrying racks arranged to be mounted adjacent the front wheel of a pedal cycle.

Carrying racks for cycles are well known and those which are mounted adjacent the front wheel are conventionally attached to the front forks of the bicycle. Typically, carrying racks comprise a pair of metal frames to which panniers or the like can be attached. One frame is attached to each respective fork, usually with a linking member which joins the respective frames together. Commonly, the frames have a first mounting point adjacent the lower ends of the front forks, typically close to the axle receiving formations of the front forks. A second mounting point is provided at a relatively higher part of the front forks.

As cycle manufacturers strive to improve and differentiate their product, there is an increasing variety of shapes and configurations of front forks. It is therefore currently impossible to provide a standard carry rack which fits all, or at least a large proportion, of bicycle fork configurations. In this respect, it is desirable that the carrying rack is configured so that when mounted on the bicycle front forks it includes a substantially horizontal upper member to which panniers and the like can be attached. Not only does the variation in shape and configuration of front forks make it difficult to mount a carry rack it is more difficult, even when such a carry rack is mounted, to ensure that an upper pannier mounting member is arranged nominally horizontally.

The present invention seeks to overcome, or at least alleviate, the above described problems.

According to the present invention there is provided a bicycle carrying frame for mounting on a bicycle front fork comprising:
a first frame member configured for attachment to a first front fork, the frame member comprising a lower attachment formation and an upper attachment formation by means of which the frame member is attachable respectively to a relatively lower mounting location of the fork and a relatively higher mounting location of the fork, one of said attachment formations being a mounting assembly comprising a rotatable element including one or more fixing points, whereby, when the frame member is disposed in a desired orientation with respect to the bicycle, the rotatable element can be rotated by a user to present the, or one of, said fixing points to the adjacent mounting location.

In preferred embodiments the bicycle carrying frame further comprises a second frame member configured for attachment to a second front fork, the second frame member comprising a lower attachment formation and an upper attachment formation by means of which the second frame member is attachable respectively to a relatively lower mounting location of the second fork and a relatively higher mounting location of the second fork, one of said attachment formations being a mounting assembly comprising a rotatable element including one or more fixing points, whereby, when the second frame member is disposed in a desired orientation with respect to the bicycle, the rotatable element can be rotated by a user to present the, or one of, said fixing points to the adjacent mounting location. Preferably in these embodiments the bicycle carrying frame further comprises a linking member joining the first and second frame members.

In preferred embodiments the upper attachment formation of said first frame is said mounting assembly.

In further preferred embodiments the upper attachment formation of the second frame member is said mounting assembly.

In more preferred embodiments the upper attachment formations of the first and second frame members are said mounting assemblies.

In other preferred embodiments said mounting assembly comprises a receiving element in which said rotatable element is mounted.

Preferably the receiving element comprises a collar of circular cross section.

It is particularly preferred that the receiving element and the rotatable element comprise complementary conical surfaces.

Preferably the or each fixing point of the rotatable element is a through bore in which a fixing bolt is receivable.

In preferred embodiments the rotatable element comprises a plurality of fixing points.

Most preferably, the fixing points are unequally spaced with respect to the rotational axis of the rotatable element.

In a preferred example, the fixing points are arranged along a diameter of the rotatable element.

Preferably the bicycle carrying frame includes a substantially linear formation configured for mounting panniers of the like, said desired orientation being a nominally horizontal arrangement of said formation.

For better understanding of the invention and to show how the same may be carried into effect, reference will now be made by way of example only to the following drawings in which:
Figure 1 is a view of a carrying rack of the invention mounted on the front forks of a cycle;
Figure 2 is a side view of a carrying rack of the invention showing an adjustable mounting assembly in exploded form;
Figure 3 shows a mounting sub-assembly for use with the carrying rack of the invention;
Figure 4 shows a fixing plate of the sub-assembly of Figure 3;
Figure 5 is a cross section through an insertable element of the adjustable mounting assembly of the invention;
Figure 6 is a cross section through a collar of the adjustable mounting assembly of the invention; and
Figure 7 is a plan view of the element of Figure 5.

Referring now to the drawings, the illustrated carrying frame 2 comprises a first frame member 4 and a second frame member 6. The frame members 4 and 6 are arranged in use on respective sides of the front wheel, attached to respective front forks 32, 34 of the cycle. The frame members 4 and 6 are linked by a joining bracket 24. Conveniently, the frame members 4 and 6 and the joining bracket 24 are made from shaped or formed metal rods or tubes. The joining bracket 24 may usefully include a mounting bracket 36 suitable for mounting a reflector, light or the like.

Each frame member 4, 6 comprises a top member 8 which is most preferably arranged substantially horizontally in use, and a bottom member 10 which may be arranged in use substantially parallel to the top member 8. Top member 8 preferably provides a mounting location for the attachment of panniers or the like. Alternative or additional mounting locations for panniers and the like may be provided if desired. The top member 8 and bottom member 10 are linked by upright members 12 and 14 which extend from the respective ends of the top and bottom members 8 and 10 to define an X-like configuration. In the preferred form the top member 8, the bottom member 10 and one upright member 12 are unitary and have a Z-like configuration. Reinforcing plates 20, 22 may advantageously be provided in the acute angle between the bottom member 10 and the upright member 12, and between the top member 8 and the upright member 12, respectively.

A lower securing member 18 extends between the upright member 12 and the bottom member 10 and includes a lower portion 18a and an upper portion 18b. In alternative configurations the securing member 18 could extend between the upright members 12, 14, or between the upright member 14 and the bottom member 10. The respective portions 18a and 18b terminate in a lower attachment fixture 26 which preferably comprises a flattened region including at least one through bore 28.

Bicycle front forks such as those illustrated at 32 and 34 conventionally include at their lower end, proximate mounting location 42 for the axle bolt of the bicycle front wheel, a mounting fixture 38, 40 in the form of a boss or the like having a through bore 38', 40'. Thus, the frame members 4 and 6 can be secured at the lower ends of the respective forks 32 34 by passing bolts 44 through one of the bores 28 of the lower attachment fixture and also into bore 38', 40' of mounting fixture 38, 40. The bores 38', 40' may be internally threaded to complement the thread of bolt 44, or the bolt 44 may be secured by a suitable nut. By providing two or more bores 28 in the lower attachment fixture 26 an initial degree of adjustment of the position of the frame members 4 and 6 relative to the forks 32, 34 is achieved.

The frame members 4 and 6 each also include an upper securing member 16 which extends between an upper part of upright member 14 and an upper part of upright member 12. In alternative configurations the upper securing member could be connected solely to one of the upright members 12, 14 or at one, or both, ends to the top member 8. The upper securing member 16 comprises a first part 16a and a second part 16b. As illustrated, the first part 16a extends from the upper member 14 and second part 16b extends from the upright member 12. The parts 16a and 16b terminate at an adjustable upper mounting assembly 30 to which they are respectively attached.

Many bicycle frame manufacturers provide on the front forks 32, 34 a mounting formation, typically in the form of a boss with a bolt-receiving through bore. These mounting formation are commonly referred to as "braze-ons" (because, originally, they were brazed onto the bicycle frame). The braze-ons provide an attachment location for the upper mounting fixture 30.

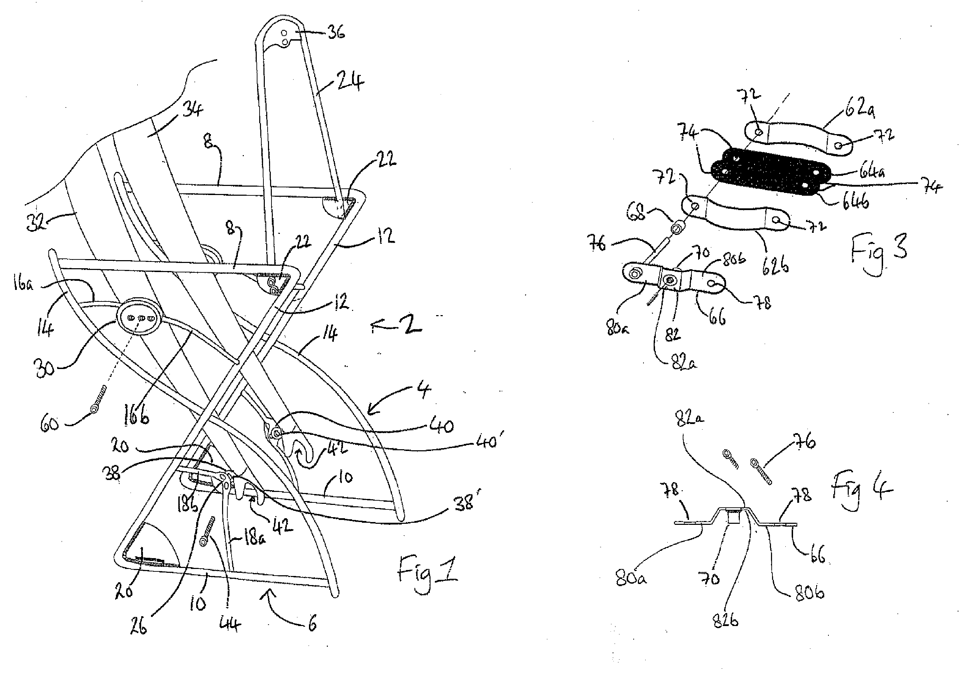

For front forks where braze-ons are not provided, alternative attachment means are necessary. Suitable attachment means are illustrated in Figures 3 and 4 and comprise first and second fastening brackets 62a, 62b which are arranged in use on respective sides of a given fork 32, 34. Each bracket 62a 62b includes through holes 72 and, when the brackets 62a, 62b are mounted to the fork 32, 34, the respective holes at opposed ends of the brackets are aligned. Desirably, anti-scratch liners 64a 64b which are conveniently made of a rubber or rubber like material may be arranged between the fork 32, 34 and the fastening bracket 62a, 62b. The liner 64a, 64b also includes through holes 74 which are aligned in use with corresponding holes 72. The attachment means illustrated in Figure 3 further comprises a fixing plate 66 which includes through holes 78 which align in use with holes 72 and 74 of the fastening brackets 62a, 62b and the liners 64a, 64b. Fixing plate 66 includes two side web portions 80a, 80b which are coplanar and which each define a through hole 78. Between the side portions 80a, 80b is an intermediate offset portion 82 which is configured to include a web portion 82a. Web portion 82a is generally parallel to the side portions 80a, 80b and is displaced from the side portions by an amount which is typically less than 1cm, for example about 7mm. A formation 70 defining a through threaded bore is attached to inner surface 82b the web portion 82a so that the through threaded bore is aligned with a corresponding through hole of the offset portion 82. The formation 70 is typically a captive nut which is welded or otherwise attached to the offset portion. The offset portion is configured so that the formation 70 does not extend beyond the plane of side web portions 80a, 80b. The attachment means are secured to the respective forks 32, 34 by passing bolts 76 through the respective sets of holes 78, 72, 74, 72 and securing with a suitable nut or the like. Note that inner surface 82 of fixing plate 66 is arranged to face the respective fork 32, 34. If necessary, spacers 68 may be inserted between the fixing plate 66 and the adjacent fastening bracket 62b. When the fastening means is secured to the respective front fork 32, 34 the formation 70 provides a mounting location for mounting fixture 30.

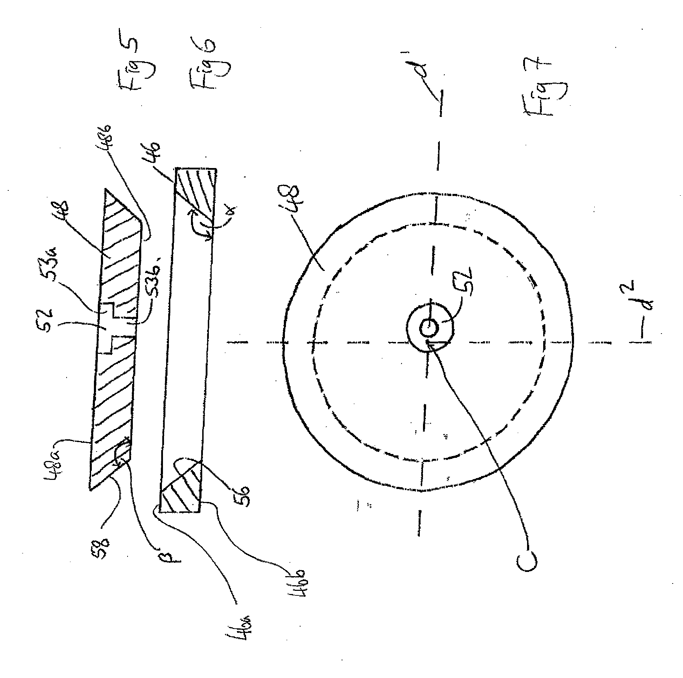

The mounting assembly 30 comprises an external collar 46 of circular cross section to which the upper securing member parts 16a and16b are attached. The collar has an outer face 46a and an inner face 46b. The collar 46 also has an internal face 56 which tapers inwardly. That is, the surface 56 defines a diameter at its outward extremity which is greater than its diameter at its inward extremity. The face 56 therefore defines a portion of a cone. Surface 56 defines an obtuse angle α (Figure 6) with the plane of inner surface 46b.

The mounting fixture 30 further comprises an insertable element 48 which is receivable in the collar 46. The element 48 is frusto-conical in shape with an outer surface 48a, an inner surface 48b and a conical surface 58. The conical surface 58 is complementary to the conical surface 56 of the collar 46. Surface 58 defines an obtuse angle β (Figure 5) with the plane of inner surface 48b. Angles α and β are most preferably substantially equal. Thus, when the element 48 is received in the collar 46, the surfaces 56 and 58 are juxtaposed, and most preferably in contact, and the element 48 is rotatable within the collar 46.

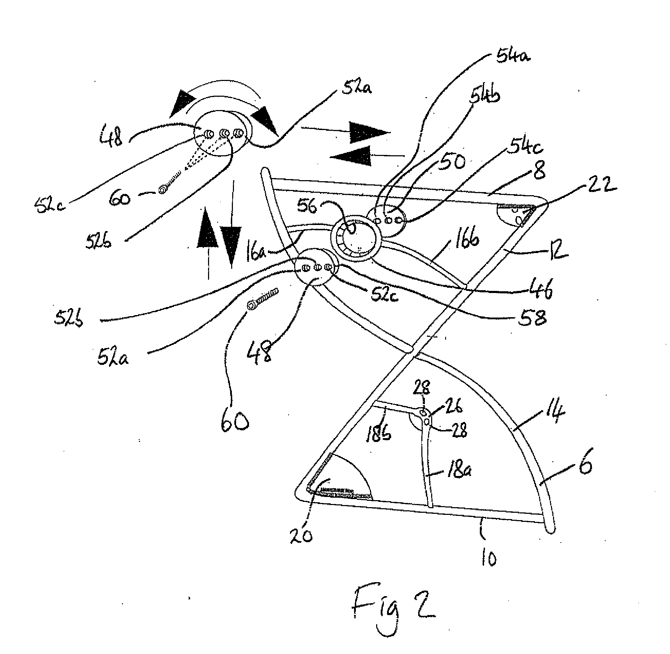

The element 48 includes at least one through bore 52 and preferably includes a plurality of bores 52. In a preferred example, as illustrated in Figures 1 and 2, the element 48 includes three bores 52a, 52b and 52c. Other numbers of bores 52 may be provided. The or each bore 52 is offset from the centre C of the element 48 as can be seen in particular from Figures 5 and 7. Figures 5 and 7 show only one bore 52 although preferably a plurality of bores such as three bores 52 is provided. Preferably, but not essentially, the bores 52 are arranged linearly along a diameter such as diameter d¹ (Figure 7) but are offset from a diameter d² which is perpendicular to diameter d¹. The spacing of the bores 52 along the diameter d¹ is most preferably unequal. More especially, in the case of an element 48 having three bores, the distance between the outer bores and the nearest point of the circumference of the element 48 is not the same and the distance between the middle bore 52 and the respective outer bores 52 is not the same. Each bore 52 is configured to receive a bolt 60 and preferably therefore comprises an enlarged portion 53a sized to accommodate the head portion of the bolt 60 and a narrower portion 53b sized to accommodate the shaft portion of the bolt 60.

For mounting the carrying frame 2 on the bicycle, initially the frame portions 4 and 6 are secured at the lower end of the forks 32, 34 using the lower attachment fixture 26 with corresponding bolts 44 accommodated in braze-ons 38 and 40. At this stage the carrying frame 2 can pivot about the bolts 44 and the user arranges the carry frame 2 so that the top members 8 of the first and second frame member 4 and 6 are at least nominally horizontal. The user then rotates the mounting fixture 30 until one of the bores 52 is aligned with the bore of the underlying braze-on or, as appropriate, with the bore of formation 70 of the alternative attachment means. Bolt 60 is then inserted into the selected bore 52 and secured in the bore of the braze-on of formation 70. If desired a circular washer 50 having through holes 54a, 54b and 54c corresponding to holes 52a, 52b and 52c may be interposed between the mounting fixture 30 and the respective fork 32, 34. Tightening of the bolt 60 urges the element 48 more closely into the collar so that the surfaces 56 and 58 are urged into frictional engagement. Rotation of the element 48 in the collar 46 is thereby further resisted. If desired, additional securing bolts 60 may be inserted into the two remaining bores 52 and secured, for example with suitable nuts, to further ensure that the element 48 is fixedly retained in the collar 56.

Because each of the bores 52 is eccentrically located with respect to the centre C of the element 48 a very wide range of fixing locations is provided with respect to the braze-on of the fork 32, 34, or the formation 70, simply by rotating the element 48 in the collar 46. It therefore becomes possibly easily to achieve a nominally horizontal configuration of the top members 8 by adjustment of mounting assembly 30.

Throughout the description and claims of this specification, the words "comprise" and "contain" and variations of the words, for example "comprising" and "comprises", means "including but not limited to", and is not intended to (and does not) exclude other moieties, additives, components, integers or steps. The words bicycle, cycle and bike are used herein interchangeably.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. A bicycle carrying frame for mounting on a bicycle front fork comprising:
a first frame member configured for attachment to a first front fork, the frame member comprising a lower attachment formation and an upper attachment formation by means of which the frame member is attachable respectively to a relatively lower mounting location of the fork and a relatively higher mounting location of the fork, one of said attachment formations being a mounting assembly comprising a rotatable element including one or more fixing points, whereby, when the frame member is disposed in a desired orientation with respect to the bicycle, the rotatable element can be rotated by a user to present the, or one of, said fixing points to the adjacent mounting location.

2. A bicycle carrying frame as claimed in claim 1 further comprising a second frame member configured for attachment to a second front fork, the second frame member comprising a lower attachment formation and an upper attachment formation by means of which the second frame member is attachable respectively to a relatively lower mounting location of the second fork and a relatively higher mounting location of the second fork, one of said attachment formations being a mounting assembly comprising a rotatable element including one or more fixing points, whereby, when the second frame member is disposed in a desired orientation with respect to the bicycle, the rotatable element can be rotated by a user to present the, or one of, said fixing points to the adjacent mounting location.

3. A bicycle carrying frame as claimed in claim 2 further comprising a linking member joining the first and second frame members

4. A bicycle carrying frame as claimed in claim 1 wherein the upper attachment formation is said mounting assembly.

5. A bicycle carrying frame as claimed in claim 2 or 3 wherein the upper attachment formation of the second frame member is said mounting assembly.

6. A bicycle carrying frame as claimed in claim 2 or 3 wherein the upper attachment formations of the first and second frame members are said mounting assemblies.

7. A bicycle carrying frame as claimed in any preceding claim wherein said mounting assembly comprises a receiving element in which said rotatable element is mounted.

8. A bicycle carrying frame as claimed in claim 7 wherein the receiving element comprises a collar of circular cross section.

9. A bicycle carrying frame as claimed in claim 8 wherein the receiving element and the rotatable element comprise complementary conical surfaces.

10. A bicycle carrying frame as claimed in any preceding claim wherein the or each fixing point of the rotatable element is a through bore in which a fixing bolt is receivable.

11. A bicycle carrying frame as claimed in any preceding claim wherein the rotatable element comprises a plurality of fixing points.

12. A bicycle carrying frame as claimed in claim 11 wherein the fixing points are unequally spaced with respect to the rotational axis of the rotatable element.

13. A bicycle carrying frame as claimed in claim 12 wherein the fixing points are arranged along a diameter of the rotatable element.

14. A bicycle carrying frame as claimed in any preceding claim including a substantially linear formation configured for mounting panniers of the like, said desired orientation being a nominally horizontal arrangement of said formation.

15. A bicycle carrying frame substantially as hereinbefore described with reference to any of Figures 1 to 7.
